# EUROPEAN PATENT APPLICATION

(11) **EP 4 593 274 A1**
(43) Date of publication of application: **30.07.2025**
(21) Application number: 23890892.5
(22) Date of filing: 17.11.2023
(51) Int. Cl.: H02M 1/10

(54) **POWER SUPPLY SYSTEM**

(30) Priority: 18.11.2022 CN 202211444758; 13.11.2023 CN 202311516159
(71) Applicant: Nanjing Chervon Industry Co., Ltd., Nanjing, Jiangsu 211106 (CN)
(72) Inventor: ZHU, Hong, Nanjing, Jiangsu 211106 (CN); XIAO, Yiwen, Nanjing, Jiangsu 211106 (CN); YANG, Dezhong, Nanjing, Jiangsu 211106 (CN)
(74) Representative: Sun, Yiming
(86) International application number: PCT/CN2023/132337
(87) International publication number: WO 2024/104463

(57) **Abstract**

Provided is a power supply system. The power supply system includes a mains interface (11) connected to the mains power supply to provide a source of electrical energy for a power supply system (10); a power rail (12) electrically connected to the mains interface (11) and mounted onto a carriage; at least one alternating current (AC) device interface (13) mounted onto the power rail (12), where the AC device interface (13) is used for connecting an AC power device (131); and multiple direct current (DC) device interfaces (14) mounted onto the power rail (12), where at least one of the multiple DC device interfaces (14) is used for connecting an energy storage device (142). The DC device interface (14) includes a first working state and a second working state. In the case where the DC device interface (14) is configured to be in the first working state, electrical energy flows from the power rail (12) to the energy storage device (142); and in the case where the DC device interface (14) is configured to be in the second working state, the electrical energy flows from the energy storage device (142) to the power rail (12).

## Description

This application claims priority to Chinese Patent Application No. 202211444758.5 filed with the China National Intellectual Property Administration (CNIPA) on Nov. 18, 2022 and Chinese Patent Application No. 202311516159.4 filed with the CNIPA on Nov. 13, 2023, the disclosures of which are incorporated herein by reference in their entireties.

### TECHNICAL FIELD

The present application relates to a power supply system.

### BACKGROUND

In the related art, with the extensive use of modified vehicles such as recreational vehicles, communication vehicles, and broadcast vehicles, modified vehicles are gradually applied to multiple fields such as communications, media, and medical care. More and more vehicles are provided with on-board devices or upgraded device functions. The on-board device has gradually evolved from the initial single device to an integration of multiple devices. The usage of the on-board device has also evolved from the initial on-board fixed device to the existing on-board fixed device, the on-board portable device, and other devices. As more and more devices are mounted on vehicles, the corresponding power supply system of the vehicle device needs to be reasonably controlled to solve problems such as power input in multiple manners, long-term use, dynamic adjustment of the charging current, and power supply for the on-board device.

With the continuous advancement of new energy technologies, the application requirements for multiple energy sources are increasing. Moreover, for the electrical loads, higher requirements are placed on the multiple modes of the power supply (for example, both alternating current (AC) output and direct current (DC) output are required), and the requirements for a high degree of on-board integration of electrical devices and power supplies are put forward.

This part provides background information related to the present application, and the background information is not necessarily the existing art.

### SUMMARY

An object of the present application is to solve or at least alleviate part or all of the preceding problems. For this reason, an object of the present application is to provide a power supply system that integrates charging and discharging. The power supply system includes a mains interface configured to be connected to a mains power supply to provide a source of electrical energy for the power supply system; a power rail electrically connected to the mains interface and mounted onto a carriage; at least one AC device interface mounted onto the power rail, where the AC device interface is used for connecting an AC power device; and multiple DC device interfaces mounted onto the power rail, where at least one of the multiple DC device interfaces is used for connecting an energy storage device. The DC device interface includes a first working state and a second working state. In the case where the DC device interface is configured to be in the first working state, electrical energy is capable of flowing from the power rail to the energy storage device; and in the case where the DC device interface is configured to be in the second working state, the electrical energy is capable of flowing from the energy storage device to the power rail.

In some examples, a solar interface configured to be electrically connected between a solar panel and the power rail is further included so that the electrical energy flows from the solar panel to the power rail.

In some examples, the power rail further includes a bidirectional inverter device electrically connected to the mains interface, where the bidirectional inverter module is configured to convert inputted AC power into DC power or convert inputted DC power into AC power.

In some examples, the DC device interface includes a bidirectional DC converter electrically connected to the power rail.

In some examples, the bidirectional DC converter is configured to convert inputted first DC power into second DC power or convert inputted second DC power into first DC power.

In some examples, the power supply system further includes a control device, where the control device is configured to control, according to a preset instruction, a flow direction of the electrical energy flowing through the power rail, and the energy storage device includes a first energy storage device electrically connected to a first DC device interface and a second energy storage device electrically connected to a second DC device interface.

In some examples, the control device is configured to control both the first DC device and the second DC device to be in the first working state so that the electrical energy flowing through the power rail flows to both the first energy storage device and the second energy storage device.

In some examples, the control device is configured to control both the first DC device and the second DC device to be in the second working state so that the electrical energy in the first energy storage device and the second energy storage device flows to the power rail.

In some examples, the control device is configured to control the first DC device to be in the first working state and control the second DC device to be in the second working state so that the electrical energy flowing through the power rail flows to the first energy storage device and the electrical energy in the second energy storage device flows to the power rail.

In some examples, the control device is configured to acquire the electrical energy from the energy storage device electrically connected to the DC device interface to supply power to the AC power device electrically connected to the AC device interface.

In some examples, the control device is configured to acquire the electrical energy from the energy storage device electrically connected to the DC device interface to feed the electrical energy back to an electrical grid through the mains interface.

In some examples, the power rail further includes a second power rail.

In some examples, the voltage of the power rail is greater than or equal to 40 V and less than or equal to 60 V.

In some examples, power-line communication is implemented between the DC device interface and the second DC device interface through the power rail.

In some examples, the energy transfer efficiency of the power supply system is greater than or equal to 85%.

A power supply system includes a mains interface configured to be connected to a mains power supply to provide a source of electrical energy for the power supply system; a power bus electrically connected to the mains interface; multiple DC device interfaces, where the DC device interface includes a bidirectional DC converter, an end of the bidirectional DC converter is connected to the power bus, and the other end of the bidirectional DC converter is connected to an energy storage device; at least one AC device interface, where the AC device interface is electrically connected to the mains interface and the DC device interface and used for connecting an AC power device; and a bidirectional inverter device electrically connected between the mains interface and the DC device interface and configured to convert inputted AC power into DC power or convert inputted DC power into AC power. The DC device interface includes a first working state and a second working state. In the case where the DC device interface is configured to be in the first working state, electrical energy flows from the power bus to the energy storage device via the bidirectional DC converter; and in the case where the DC device interface is configured to be in the second working state, the electrical energy flows from the energy storage device to the power bus via the bidirectional DC converter.

In some examples, a solar interface configured to be electrically connected between a solar panel and the power bus is further included so that the electrical energy flows from the solar panel to the power bus.

In some examples, the DC device interface includes a second DC device interface, the second DC device interface includes a second bidirectional DC converter, an end of the second bidirectional DC converter is connected to the power bus, the other end of the second bidirectional DC converter is connected to a second energy storage device, and the electrical energy flowing from the energy storage device to the power bus via the bidirectional DC converter flows from the power bus to the second energy storage device via the second bidirectional DC converter.

In some examples, power-line communication is implemented between the DC device interface and the second DC device interface through the power bus.

In some examples, the electrical energy flowing from the energy storage device to the power bus via the bidirectional DC converter flows to the AC device interface via the bidirectional inverter device to supply power to the AC power device.

In some examples, power-line communication is implemented between the AC device interface and the DC device interface through the power bus.

In some examples, the electrical energy flowing from the energy storage device to the power bus via the bidirectional DC converter flows to the mains interface via the bidirectional inverter device so that the electrical energy is fed back to an electrical grid.

In some examples, the voltage of the power bus is greater than or equal to 40 V and less than or equal to 60 V.

In some examples, the power supply system further includes a control device, where the control device is configured to control, according to a preset instruction, a flow direction of the electrical energy flowing through the power bus.

In some examples, the power supply system further includes a communication device configured to be communicatively connected to an external device.

In some examples, the external device transmits a command to the control device through the communication device to control the DC device interface to switch between the first working state and the second working state.

In some examples, each of the multiple DC device interfaces has a unique number, and the external device identifies a corresponding one of the multiple DC device interfaces through the unique number and controls the state of the corresponding one of the multiple DC device interfaces.

In some examples, the external device is configured to be operable by a user to configure the unique number of the corresponding one of the multiple DC device interfaces.

In some examples, through the communication device, the external device acquires information about the energy storage device electrically connected to the DC device interface, where the information includes at least the model, the current battery level, and the temperature of the energy storage device.

In some examples, the control device is configured to send fault information of the power supply system to the external device through the communication device to remind a user.

A power supply system includes a mains interface configured to be connected to a mains power supply to provide a source of electrical energy for the power supply system; a power bus electrically connected to the mains interface; multiple DC device interfaces connected to the power bus, where at least one of the multiple DC device interfaces is used for connecting an energy storage device; at least one AC device interface, where the AC device interface is electrically connected to the mains interface and the DC device interface and used for connecting an AC power device; and a control device configured to control a flow direction of energy on the power bus. The DC device interface includes a first working state and a second working state. In the case where the DC device interface is configured to be in the first working state, electrical energy flows from the power bus to the energy storage device; and in the case where the DC device interface is configured to be in the second working state, the electrical energy flows from the energy storage device to the power bus. The energy transfer efficiency of the power supply system is greater than or equal to 90%.

In some examples, the energy transfer efficiency of the power supply system is greater than or equal to 85%.

In some examples, the multiple DC device interfaces include a first DC device interface and a second DC device interface, a first bidirectional DC converter is electrically connected between the first DC device interface and the power bus, and a second bidirectional DC converter is electrically connected between the second DC device interface and the power bus.

In some examples, the power supply system has multiple working modes, and the control device is configured to control the multiple working modes of the power supply system according to user input or a preset instruction.

In some examples, in the case where the power supply system is configured to be in a first working mode, the mains interface is connected to AC power, and the DC device interface is in the first working state.

In some examples, in the case where the power supply system is configured to be in a second working mode, the first DC device interface and the second DC device interface are in the second working state, and the output voltage of the first bidirectional DC converter is basically equal to the output voltage of the second bidirectional DC converter.

In some examples, in the case where the power supply system is configured to be in the second working mode, the energy transfer efficiency of the power supply system is greater than or equal to 90%.

In some examples, in the case where the power supply system is configured to be in a third working mode, the first DC device interface electrically connected to a first energy storage device is configured to be in the first working state, the second DC device interface electrically connected to a second energy storage device is configured to be in the second working state, and the output voltage of the first energy storage device is greater than the output voltage of the second energy storage device.

In some examples, the electrical energy flowing to the power bus via the first DC device interface flows from the AC device interface to the AC power device to supply power to the AC power device.

In some examples, in the case where the power supply system is configured to be in the third working mode, the energy transfer efficiency of the power supply system is greater than or equal to 95%.

In some examples, a bidirectional inverter device is further electrically connected to the power bus, and the bidirectional inverter device is disposed between the mains interface and the DC device interface and is configured to convert inputted AC power into DC power or convert inputted DC power into AC power.

In some examples, the control device is configured to feed the electrical energy flowing from the energy storage device to the power bus to an electrical grid through the mains interface.

In some examples, the power supply system further includes a communication device communicatively connected to an external device, where the communication device transmits a command to the control device to control the DC device interface to switch between the first working state and the second working state.

In some examples, each of the multiple DC device interfaces has a unique number, and the external device identifies a corresponding one of the multiple DC device interfaces through the unique number and controls the state of the corresponding one of the multiple DC device interfaces.

In some examples, the control device is configured to send fault information of the power supply system to the external device through the communication device to remind a user.

A power supply system controlled by an external device includes a mains interface configured to be connected to a mains power supply to provide a source of electrical energy for the power supply system; a power bus electrically connected to the mains interface; multiple DC device interfaces connected to the power bus, where at least one of the multiple DC device interfaces is used for connecting an energy storage device; at least one AC device interface, where the AC device interface is electrically connected to the mains interface and the DC device interface and used for connecting an AC power device; a communication device configured to be communicatively connected to the external device; and a control device electrically connected to the communication device, where the control device is configured to control a flow direction of energy on the power bus. The DC device interface has multiple working states. In the first working state, electrical energy flows from the power bus to the energy storage device; and in the second working state, the electrical energy flows from the energy storage device to the power bus. The external device transmits a command to the control device through the communication device to control the DC device interface to switch between the first working state and the second working state.

In some examples, each of the multiple DC device interfaces has a unique number, and the external device identifies a corresponding one of the multiple DC device interfaces through the unique number and controls the state of the corresponding one of the multiple DC device interfaces.

In some examples, the external device is configured to be operable by a user to configure the unique number of the corresponding one of the multiple DC device interfaces.

In some examples, through the communication device, the external device acquires information about the energy storage device electrically connected to the DC device interface, where the information includes at least the model, the current battery level, and the temperature of the energy storage device.

In some examples, the external device is in signal connection with the communication device to acquire the current state of the AC device interface.

In some examples, a communication manner between the external device and the communication device includes wired communication or wireless communication.

In some examples, the wireless communication includes Bluetooth, Wireless Fidelity (Wi-Fi), the Internet, a cellular network, or long-term evolution (LTE) of universal mobile communication technology.

In some examples, the control device is configured to send fault information of the power supply system to the external device through the communication device to remind a user.

In some examples, the control device is configured to send fault information of the power supply system to the external device through the communication device to remind a user.

### BRIEF DESCRIPTION OF DRAWINGS

FIG. 1 is a perspective view of an on-board power supply system as a specific example.
FIG. 2A is a perspective view of another on-board power supply system as a specific example.
FIG. 2B is a perspective view of another on-board power supply system as a specific example.
FIG. 3 is a schematic block diagram of the power supply system in FIG. 1 as a specific example.
FIG. 4 is a circuit topology diagram of a bidirectional DC converter in the power supply system in FIG. 3.
FIG. 5 is a diagram illustrating the electrical energy flow of the power supply system in FIG. 3 as a specific example.
FIG. 6 is another diagram illustrating the electrical energy flow of the power supply system in FIG. 3 as a specific example.
FIG. 7 is another diagram illustrating the electrical energy flow of the power supply system in FIG. 3 as a specific example.
FIG. 8 is another diagram illustrating the electrical energy flow of the power supply system in FIG. 3 as a specific example.
FIG. 9 is a schematic diagram illustrating communication between the power supply system in FIG. 3 and an external device.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

The present application provides a multi-source power supply system, which may be applied to automobiles, recreational vehicles, or households. The power supply system in the present application can achieve the free conversion between AC power and DC power, energy transmission between different energy storage devices, power supply to the AC device by the energy storage device, and feeding the surplus electrical energy in the power supply system back to the electrical grid, thereby achieving a power supply system that integrates charging and discharging.

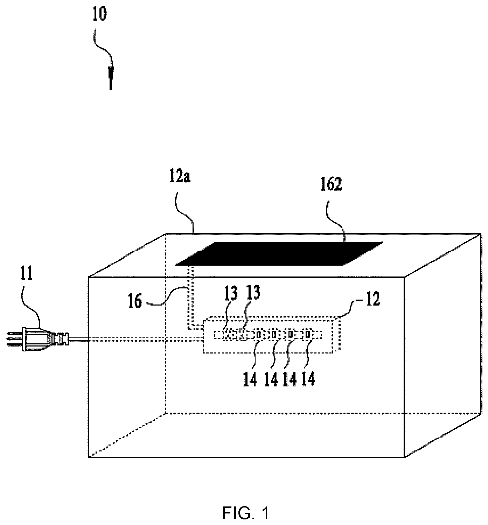

As shown in FIG. 1, a power supply system 10 applied to a vehicle, that is, an on-board power supply system, includes a mains interface 11, a power rail 12, AC device interfaces 13, and DC device interfaces 14, and the AC device interfaces 13 and the DC device interfaces 14 are mounted onto the power rail 12. The power rail 12 is mounted onto a carriage 30 and electrically connected to the mains interface 11. The mains interface 11 is configured to be connected to the mains power supply to provide a source of electrical energy for the power supply system 10. One or more AC device interfaces 13 and one or more DC device interfaces 14 are provided. The AC device interface 13 is used for connecting an AC power device 131. The DC device interface 14 is used for connecting an energy storage device 142 or a DC power device 143. In this example, the power supply system 10 further includes a solar interface 16 configured to be electrically connected between a solar panel 162 and the power rail 12 so that the electrical energy flows from the solar panel to the power rail 12.

The AC power device electrically connected to the AC device interface 13 in the preceding power supply system 10 applied to the vehicle may be an AC power tool, such as an angle grinder or a table saw. The DC power device electrically connected to the DC device interface 14 may be a mobile phone, a tablet computer, a speaker, or the like. The energy storage devices electrically connected to the DC device interfaces 14 may be battery packs of different types. The preceding battery packs are suitable for power tools, illumination devices, and wheeled power tools. For example, the power tool is a handheld power tool such as an electric drill, an electric wrench, an electric screwdriver, an electric hammer drill, an electric circular saw, or a sander, a table power tool such as a table saw, an outdoor power tool such as a mower, a string trimmer, a pair of electric shears, a hedge trimmer, or an electric saw, or a wheeled power tool such as a manned mower, a snow thrower, or an all-terrain vehicle (ATV).

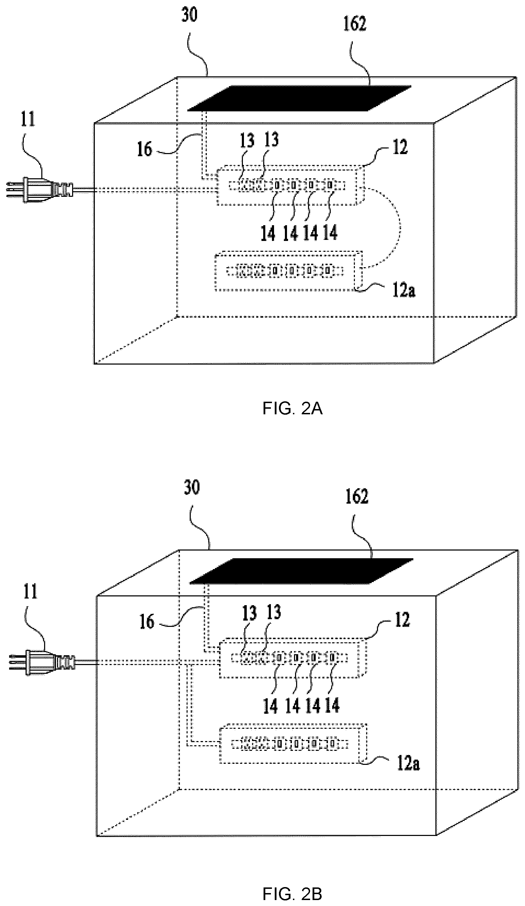

As shown in FIG. 2A, the power supply system 10 further includes a second power rail 12a. The second power rail 12a is connected in series with the power rail 12, and the arrangement and number of the DC device interfaces and AC device interfaces arranged on the second power rail 12a may be the same as or different from the arrangement and number of the DC device interfaces and AC device interfaces arranged on the power rail 12. In some examples, as shown in FIG. 2B, the second power rail 12a may be connected in parallel with the power rail 12. The arrangement and number of the DC device interfaces and AC device interfaces arranged on the second power rail 12a may be the same as or different from the arrangement and number of the DC device interfaces and AC device interfaces arranged on the power rail 12. Of course, the number of second power rails 12a is not limited and may be set by those skilled in the art according to actual application scenarios. In fact, the power rails in the power supply system 10 may be connected in series and in parallel.

In some examples, the preceding power supply system may be used in households. Different from the power supply system 10 used in automobiles, the power rail line used in households is longer and may be disposed at home or in the yard. The power rail line may be disposed on the wall or on the ground. On the other hand, since many electrical devices are used in the home, the number of DC device interfaces and the number of AC device interfaces are relatively large.

The above is only an introduction to the specific application scenarios of the power supply system in the present application as specific examples. In fact, the power supply system in the present application may also be applied to other occasions, such as factories, office buildings, and shopping malls.

The components of the power supply system in the present application and the working principles of the components are described in detail below.

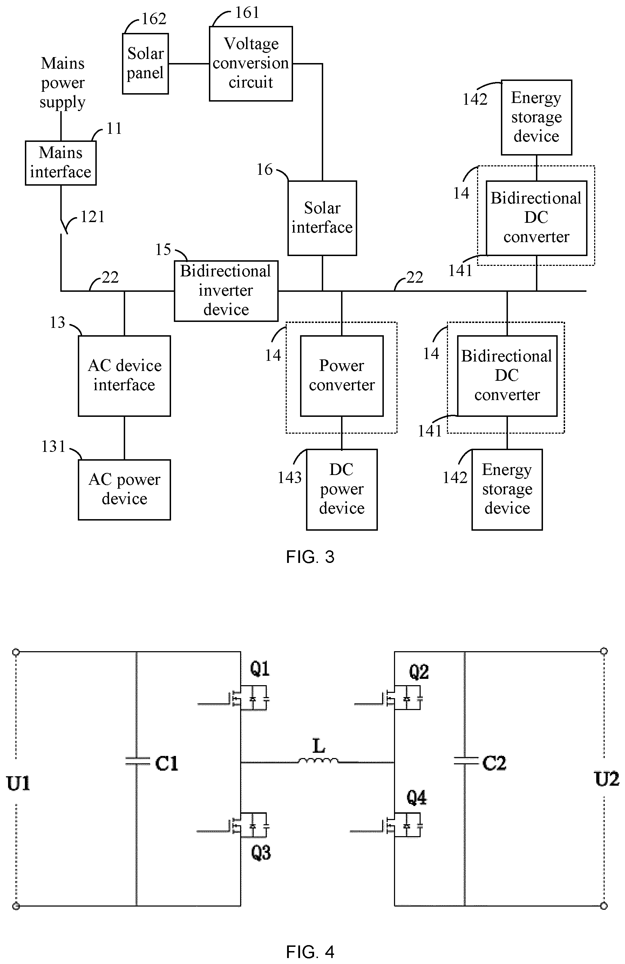

As shown in FIG. 3, the power supply system 10 includes the mains interface 11, a power bus 22 electrically connected to the mains interface 11, the DC device interfaces 14, and the AC device interfaces 13, where the DC device interfaces 14 and the AC device interfaces 13 are electrically connected to the power bus 22. The preceding power rail 12 may be understood as a device for carrying the power bus 22 and may include the power bus 22. The mains interface 11 is configured to be connected to an AC power supply from the electrical grid. The power bus 22 is used for carrying electrical energy. In some examples, the voltage of the power bus 22 is greater than or equal to 40 V and less than or equal to 60 V. In some examples, the voltage of the power bus 22 is set to 56 V. The AC device interface 13 is configured to be electrically connected to an AC power device (such as a household appliance such as a washing machine or a television) to provide the electrical energy required for the operation of the AC power device. The DC device interface 14 is configured to be electrically connected to a DC power device (such as a mobile phone or a tablet computer) to charge the DC power device. The DC device interface 14 is further configured to be electrically connected to an energy storage device (such as a battery pack) to charge the energy storage device. In this example, one or more AC device interfaces 13 and one or more DC device interfaces 14 are provided, and the number of AC device interfaces 13 and the number of DC device interfaces 14 may be set according to the application scenario of the power supply system 10. In some examples, the DC device interface includes, but is not limited to, a Universal Serial Bus (USB) Type-C interface, a USB interface, a personal identification number (PIN) interface, or a lighting interface.

In some examples, the energy storage device includes the battery pack. Specifically, the energy storage devices include battery packs of different types and with different capacities. In some examples, the energy of one battery pack is greater than or equal to 0.1 kW·h and less than 2 kW·h. In some examples, the energy of one battery pack is greater than or equal to 1 kW·h and less than 2 kW·h. In some examples, the energy of one battery pack is greater than or equal to 2 kW·h and less than or equal to 4 kW·h. In some examples, the nominal voltage of the battery pack is greater than or equal to 20 V and less than or equal to 100 V, or the nominal voltage of the battery pack may be greater than or equal to 36 V and less than or equal to 80 V, or the nominal voltage of the battery pack may be greater than or equal to 40 V and less than or equal to 60 V. In some examples, the battery pack may be a sodium-ion battery, a semi-solid-state battery, an all-solid-state battery, a silicon-carbon battery, or a battery pack of another type. In some examples, at least one semi-solid lithium battery is provided in the power supply system 10 and used as the main energy storage device for the household. Specifically, the semi-solid lithium battery has the following advantages: being light, being thin, being small in size, high energy density, and high safety. After semi-solid electrolytes are used, the applicable material system of the lithium battery is changed. The core point is that there is no need to use the lithium-intercalated graphite negative electrode; instead, lithium may be used directly as the negative electrode. In this manner, the usage amount of negative electrode materials can be significantly reduced, and the energy density of the entire power battery can be significantly improved.

The power supply system 10 further includes a bidirectional inverter device 15 electrically connected to the mains interface 11 and configured to process the mains power supply connected to the mains interface 11. Specifically, the bidirectional inverter device 15 is a bidirectional inverter for converting inputted AC power into DC power or converting inputted DC power into AC power. In some examples, the bidirectional inverter device 15 is formed by a bidirectional AC/DC and a bidirectional isolated DC/DC. The bidirectional AC/DC part includes an H4 inverter, an H6 inverter, an I-type three-level inverter, and a T-type three-level inverter. The bidirectional isolated DC/DC part includes a bidirectional inductor-inductor-capacitor (LLC) converter, a bidirectional capacitor-inductor-inductor-capacitor (CLLC) converter, a bidirectional capacitor-inductor-inductor-inductor-capacitor (CLLLC) converter, and a bidirectional Dual Active Bridge (DAB) converter. In this example, the bidirectional AC/DC part is the bidirectional H4 converter, and the bidirectional isolated DC/DC part is the bidirectional DAB converter.

In some examples, the DC device interface 14 includes a first working state and a second working state. In the case where the DC device interface 14 is configured to be in the first working state, the electrical energy flows from the power bus 22 to the energy storage device. In the case where the DC device interface 14 is configured to be in the second working state, the electrical energy flows from the energy storage device to the power bus 22. Specifically, the DC device interface 14 includes a bidirectional DC converter 141 configured to convert the electrical energy on the power bus 22 into the electrical energy adapted to the energy storage device for charging the energy storage device. The bidirectional DC converter 141 is configured to convert the electrical energy in the energy storage device into the electrical energy adapted to the power bus 22. In the case where the DC device interface 14 is configured to be in the first working state, the electrical energy flows from the power bus to the energy storage device via the bidirectional DC converter 141. In the case where the DC device interface 14 is configured to be in the second working state, the electrical energy flows from the energy storage device to the power bus 22 via the bidirectional DC converter 141.

In this example, the bidirectional DC converter 141 is a bidirectional isolated DC/DC converter for achieving the bidirectional flow of DC power. Of course, the bidirectional DC converter 141 may be implemented in other forms. For example, the bidirectional non-isolated DC/DC converters include a synchronous Buck/Boost converter, a bidirectional Buck-Boost converter, a bidirectional single-ended primary-inductor converter (SEPIC), a bidirectional Zero Energy Thermonuclear Assembly (ZETA) converter, and a bidirectional Cuk converter. In this example, voltage conversion is achieved using a bidirectional Buck-Boost circuit. The bidirectional DC converter 141 adopts the topology structure shown in FIG. 4 and converts the DC voltage U1 on the power bus 12 into the DC voltage U2 to charge the energy storage device electrically connected to the DC device interface 14. In addition, the bidirectional DC converter 141 can convert the voltage outputted by the energy storage device into the DC voltage U1. The bidirectional DC converter 141 includes at least a switching transistor Q1, a switching transistor Q2, a switching transistor Q3, a switching transistor Q4, a capacitor C1, a capacitor C2, and an inductor L. A control device 17 is separately connected to the gates of the switching transistor Q1, the switching transistor Q2, the switching transistor Q3, and the switching transistor Q4 and is used for controlling the switching transistor Q1, the switching transistor Q2, the switching transistor Q3, and the switching transistor Q4 to be turned on and off, thereby implementing a voltage conversion function of a DC-DC conversion circuit. The bidirectional DC converter 141 in this example may be understood as a four-switch buck-boost (FSBB) circuit. The FSBB circuit is adopted so that soft switching is achieved, thereby improving the conversion efficiency of the DC-DC conversion circuit.

In some examples, the power supply system 10 further includes the solar interface 16 electrically connected to the power bus 22. Specifically, the solar interface 16 is configured to be electrically connected between the solar panel and the power bus 22 and is configured to acquire electrical energy from the solar panel and transmit the electrical energy to the power bus 22. In some examples, the electrical energy in the solar panel flows to the power bus 22 via a voltage conversion circuit 161.

In this manner, when the power supply system 10 connects the mains power supply to the power bus 22 through the mains interface 11, the AC power device connected to the AC device interface 13 acquires the electrical energy on the power bus 22 to perform work. At the same time, the connected mains power is converted into the first DC power via the bidirectional inverter device 15. In some examples, the voltage of the first DC power is greater than or equal to 40 V and less than or equal to 60 V. In this example, the voltage of the first DC power is 56 V. The bidirectional DC converter 141 is connected to the power bus 22 to convert the first DC power into the second DC power. The voltage of the first DC power is greater than or equal to the voltage of the second DC power. In the case where the second DC power exists on the power bus 22, the DC power device or energy storage device connected to the DC device interface 14 acquires the electrical energy on the power bus 22 and thus starts to perform work or store the electrical energy.

In general, part of the electrical energy on the power bus 22 in the power supply system 10 is from the electrical energy connected through the mains interface 11, and part of the electrical energy on the power bus 22 in the power supply system 10 is from the solar panel. Specifically, the electrical energy on the solar panel is transferred to the power bus 22 via the voltage conversion circuit 161 and the solar interface 16. Of course, part of the electrical energy on the power bus 22 in the power supply system 10 is from the energy storage device electrically connected to the power bus 22. Specifically, when the external power supply is cut off (such as a power outage in the electrical grid), the electrical energy in the energy storage device electrically connected to the power bus 22 through the DC device interface 14 flows to the power bus 22 via the bidirectional DC converter 141, thereby supplying power to the electrical device electrically connected to the power bus 22.

In some examples, the power supply system 10 further includes the control device 17, where the control device 17 is configured to control, according to a preset instruction, a flow direction of the electrical energy flowing through the power bus 22. Specifically, the control device 17 is connected to at least the bidirectional inverter device 15 and the bidirectional DC converter 141 and used for controlling the flow direction of the electrical energy flowing through the bidirectional inverter device 15 and the bidirectional DC converter 161. Of course, the control device 17 is also electrically connected to the voltage conversion circuit 161 and used for controlling the state of the electrical energy flowing from the solar panel to the power bus 22. It is to be understood that the preceding preset instruction may be a preset instruction inputted by the user and, of course, may also be an adaptive instruction provided by the power supply system 10.

In some examples, internal communication of the power supply system 10 may be implemented using power-line carrier technology. The principle is to integrate the power-line carrier technology and embed it into multiple components and use the power bus 22 as a carrier communication medium to achieve communication and control between the multiple components. Power-line carrier technology is a communication manner unique to the electric power system. Power-line communication refers to the technology of using existing power lines to transmit analog or digital signals at high speed through carriers. The most prominent feature is that there is no need to set up a new network, and data can be transmitted as long as there are power lines. The power supply system 10 adopts power-line carrier technology to query the states of all devices at any time and control the devices.

The energy transfer efficiency of the power supply system 10 in the present application is relatively high. The bidirectional DC converter 141 in the present application adopts a soft switching control manner. Compared with the traditional hard switching control manner, on the one hand, the soft switching control manner reduces the switching losses and switching noise, increases the switching frequency, reduces the volume of magnetic components, and further improves the power density. On the other hand, soft switching control can reduce switching losses and thus improve the energy transfer efficiency. In some examples, the energy transfer efficiency of the power supply system 10 is greater than or equal to 90%. In some examples, the energy transfer efficiency of the power supply system 10 is greater than or equal to 85%.

The power supply system 10 has multiple working modes, and the control device 17 is configured to control the multiple working modes of the power supply system 10 according to user input or a preset instruction. In the case where the power supply system 10 is configured to be in a first working mode, the mains interface 11 is connected to the AC power, the DC device interface 14 is in the first working state, and the electrical energy on the power bus 22 flows to the loads. The preceding loads may be understood as all the electrical devices electrically connected to the power bus. When the power supply system 10 operates in the first working mode, the energy transfer efficiency of the power supply system 10 is greater than or equal to 90%. In the case where the power supply system 10 is configured to be in a second working mode, the first DC device interface and the second DC device interface are in the second working state, and the output voltage of the first bidirectional DC converter is basically equal to the output voltage of the second bidirectional DC converter. In the case where the power supply system 10 is configured to be in the second working mode, the energy transfer efficiency of the power supply system 10 is greater than or equal to 90%. In the case where the power supply system 10 is configured to be in a third working mode, the first DC device interface electrically connected to a first energy storage device is configured to be in the first working state, the second DC device interface electrically connected to a second energy storage device is configured to be in the second working state, and the output voltage of the first energy storage device is greater than the output voltage of the second energy storage device. The electrical energy flowing to the power bus via the first DC device interface flows from the AC device interface to the AC power device to supply power to the AC power device. In the case where the power supply system is configured to be in the third working mode, the energy transfer efficiency of the power supply system is greater than or equal to 95%.

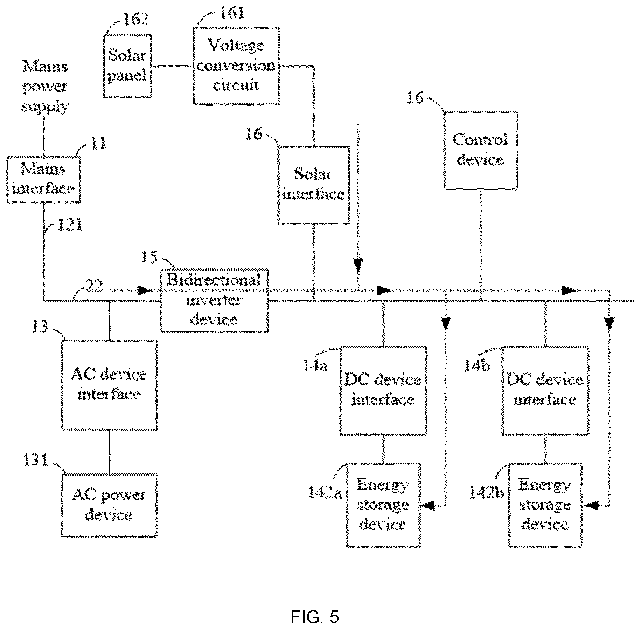

In some examples, as shown in FIG. 5, the energy storage devices include a first energy storage device 142a electrically connected to a first DC device interface 14a and a second energy storage device 142b electrically connected to a second DC device interface 14b. The control device 17 is configured to control both the first DC device 14a and the second DC device 14b to be in the first working state so that the electrical energy of the power bus 22 flows to both the first energy storage device 142a and the second energy storage device 142b to charge the first energy storage device 142a and the second energy storage device 142b. In this example, the electrical energy on the power bus 12 may be from the electrical grid or the solar panel.

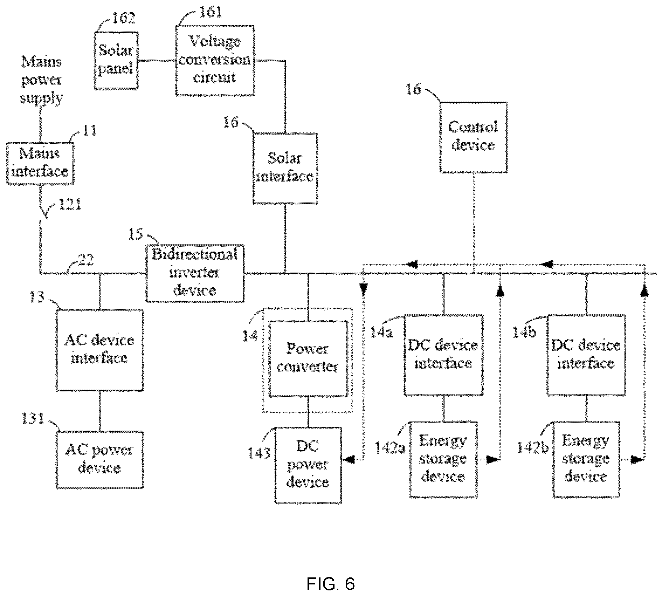

In some examples, referring to FIG. 6, the control device 17 is configured to control both the first DC device interface 14a and the second DC device interface 14b to be in the second working state so that the electrical energy in the first energy storage device 142a and the second energy storage device 142b flows to the power bus 22 to supply power to other devices electrically connected to the power bus 22.

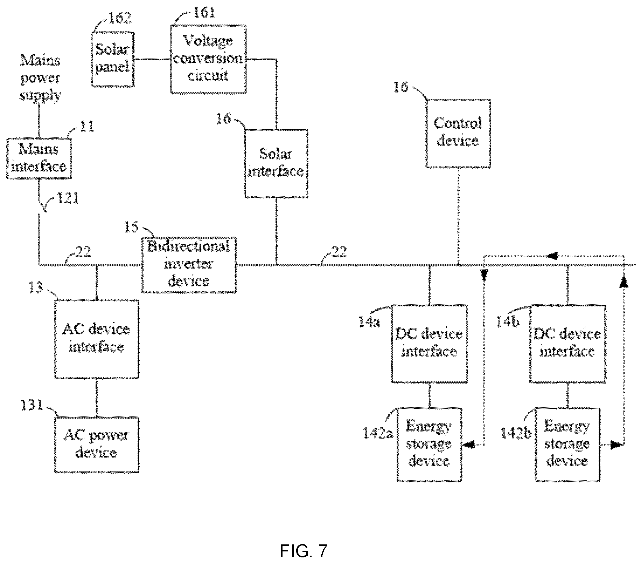

In some examples, as shown in FIG. 7, the control device 17 is configured to control the first DC device interface 14a to be in the first working state and control the second DC device interface 14b to be in the second working state so that the electrical energy flowing from the second DC device interface 14b to the power bus 22 flows to the first energy storage device 142a via the first DC device interface 14a. In other words, the control device 17 is configured to transfer the electrical energy in the first energy storage device 142a to the second energy storage device 142b via the power bus 22.

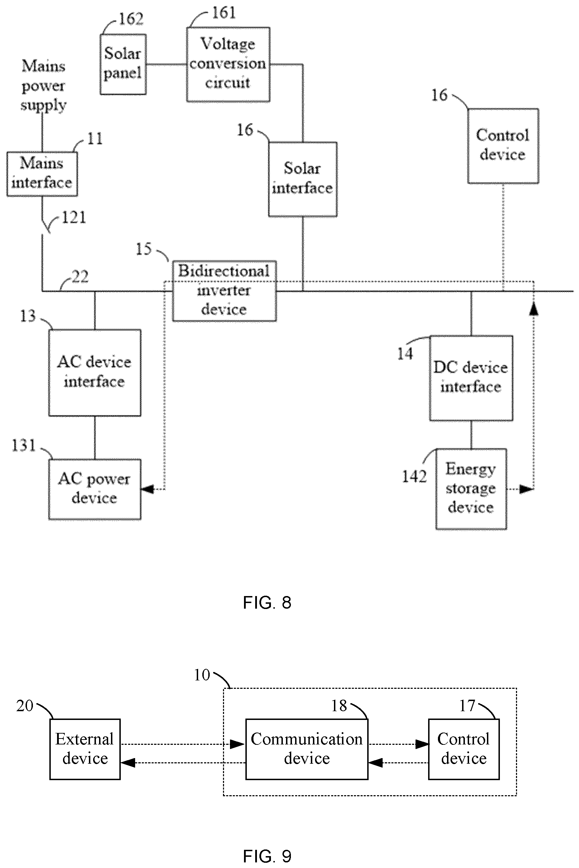

In some examples, as shown in FIG. 8, the control device 17 is configured to control at least one of the DC device interfaces 14 to be in the second working state so that the electrical energy in the energy storage device connected to the DC device interface 14 is transferred to the power bus 22 and then converted into AC power through the bidirectional inverter device 15, thereby supplying power to the AC power device electrically connected to the AC device interface 13.

In some examples, referring to FIG. 3, the power supply system 10 includes a main switch 121, and the control device 17 is electrically connected to the main switch 121 and is configured to control the main switch 121 to be turned on and off. The control device 17 controls the main switch 121 to be turned on and off according to a preset condition, thereby controlling whether to access the mains power supply via the mains interface 11 to supply power to the electrical devices or energy storage devices electrically connected to the power bus 22. Specifically, the preceding preset condition includes determining the electricity consumption period based on peak and valley electricity. For example, in the case where the electricity consumption period is the locally specified valley electricity period, the control device 17 controls the main switch 121 to be turned on so that the electrical energy on the electrical grid is connected to the power bus 22 via the mains interface 11, thereby supplying power to all the electrical devices electrically connected to the power bus 22 or charging all the energy storage devices electrically connected to the power bus 22. In the case where the power consumption period is the local peak electricity period and less electrical energy needs to be acquired from the power bus 22, the control device 17 is configured to turn off the main switch 121, and the electrical devices are powered by the energy storage devices electrically connected to the power bus 22. Of course, the electrical devices may also be powered by the electrical energy from the solar interface 16 electrically connected to the power bus 22. The advantage of this is that through off-peak electricity consumption, while the user's electricity costs can be effectively reduced, the power supply pressure on the electrical grid during the peak electricity period can be alleviated.

In some examples, the power supply system 10 can feed electrical energy back to the electrical grid, thereby acquiring a certain amount of remuneration. Specifically, the control device 17 is configured to perform voltage conversion on the electrical energy on the power bus 22 through the bidirectional inverter device 15 and then feed the electrical energy back to the electrical grid via the mains interface 11. The electrical energy on the power bus 22 mentioned above includes at least the electrical energy in the energy storage device electrically connected to the DC device interface 14 and further includes the electrical energy connected via the solar interface 16.

In some examples, as shown in FIG. 9, the power supply system 10 may be controlled by an external device 20, and the user controls the overall working state of the power supply system 10 by operating the external device. Specifically, the external device 20 transmits the command inputted by the user to the main control device 17 through a communication device 18 inside the power supply system 10, thereby setting the working state of the power supply system 10. In the present application, the communication device 18 communicates with the external device 20 via a wired or wireless communication network. In some examples, the communication device 18 communicates with the external device 20 via Bluetooth, Wi-Fi transmission, or LTE. In some examples, the external device 20 may be a smartphone, a tablet computer, or a laptop computer. In some examples, the communication device 18 may include separate transmitting and receiving assemblies. In some examples, the communication device 18 may include a wireless adapter attached to the power supply system 10. In some examples, the communication device 18 is a wireless transceiver that encodes the information received from the control device 17 into a wireless carrier signal and transmits the wireless carrier signal to the external device 20. In addition, the communication device 18 decodes the wireless signal transmitted from the external device 20 and provides the decoded information to the control device 17. It is to be understood that the communication network between the communication device 18 and the external device 20 may include a short-range network, such as a Bluetooth network or a Wi-Fi network or may include a long-range network, such as the Internet or a cellular network.

In some examples, in the power supply system 10, each DC device interface 14 has a unique number, and the external device identifies the corresponding DC device interface 14 through the unique number and controls the state of the corresponding DC device interface 14. Specifically, the external device 20 transmits a command to the control device 17 through the communication device 18 to control the DC device interface 14 to switch between the first working state and the second working state. In some examples, the external device 20 is configured to be operable by the user to configure the unique number of the DC device interface 14. In some examples, through the communication device 18, the external device 20 acquires the information about the energy storage device electrically connected to the DC device interface 14. Specifically, the information about the energy storage device includes, but is not limited to, the model, the current battery level, and the temperature of the energy storage device. In some examples, the external device 20 is in signal connection with the communication device 18 to acquire the current state of the AC device interface. The preceding state includes, but is not limited to, the type of the electrical device electrically connected to the AC device interface. In some examples, a communication manner between the external device 20 and the communication device 18 includes wired communication or wireless communication. Wireless communication includes Bluetooth, Wi-Fi, the Internet, a cellular network, or LTE. In some examples, the control device 17 is configured to send fault information of the power supply system to the external device through the communication device 17 to remind the user.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A power supply system, comprising:
a mains interface configured to be connected to a mains power supply to provide a source of electrical energy for the power supply system;
a power rail electrically connected to the mains interface and mounted onto a carriage;
at least one alternating current (AC) device interface mounted onto the power rail, wherein the at least one AC device interface is used for connecting an AC power device; and
a plurality of direct current (DC) device interfaces mounted onto the power rail, wherein at least one of the plurality of DC device interfaces is used for connecting an energy storage device;
wherein the at least one of the plurality of DC device interfaces comprises a first working state and a second working state, wherein in a case where the at least one of the plurality of DC device interfaces is configured to be in the first working state, electrical energy is capable of flowing from the power rail to the energy storage device; and in a case where the at least one of the plurality of DC device interfaces is configured to be in the second working state, the electrical energy is capable of flowing from the energy storage device to the power rail.

2. The power supply system of claim 1, further comprising a solar interface configured to be electrically connected between a solar panel and the power rail so that the electrical energy flows from the solar panel to the power rail.

3. The power supply system of claim 1, wherein the power rail further comprises a bidirectional inverter device electrically connected to the mains interface, wherein the bidirectional inverter module is configured to convert inputted AC power into DC power or convert inputted DC power into AC power.

4. The power supply system of claim 1, wherein the at least one of the plurality of DC device interfaces comprises a bidirectional DC converter electrically connected to the power rail.

5. The power supply system of claim 4, wherein the bidirectional DC converter is configured to convert inputted first DC power into second DC power or convert inputted second DC power into first DC power.

6. The power supply system of claim 1, further comprising a control device, wherein the control device is configured to control, according to a preset instruction, a flow direction of the electrical energy flowing through the power rail, and the energy storage device comprises a first energy storage device electrically connected to a first DC device interface and a second energy storage device electrically connected to a second DC device interface.

7. The power supply system of claim 6, wherein the control device is configured to control both the first DC device and the second DC device to be in the first working state so that the electrical energy flowing through the power rail flows to both the first energy storage device and the second energy storage device.

8. The power supply system of claim 6, wherein the control device is configured to control both the first DC device and the second DC device to be in the second working state so that the electrical energy in the first energy storage device and the second energy storage device flows to the power rail.

9. The power supply system of claim 6, wherein the control device is configured to control the first DC device to be in the first working state and control the second DC device to be in the second working state so that the electrical energy flowing through the power rail flows to the first energy storage device and the electrical energy in the second energy storage device flows to the power rail.

10. The power supply system of claim 6, wherein the control device is configured to acquire the electrical energy from the energy storage device electrically connected to the DC device interface to supply power to the AC power device electrically connected to the AC device interface.

11. The power supply system of claim 6, wherein the control device is configured to acquire the electrical energy from the energy storage device electrically connected to the DC device interface to feed the electrical energy back to an electrical grid through the mains interface.

12. The power supply system of claim 1, wherein the power rail further comprises a second power rail.

13. The power supply system of claim 1, wherein a voltage of the power rail is greater than or equal to 40 V and less than or equal to 60 V.

14. The power supply system of claim 6, wherein power-line communication is implemented between the DC device interface and the second DC device interface through the power rail.

15. The power supply system of claim 1, wherein energy transfer efficiency of the power supply system is greater than or equal to 85%.

16. A power supply system, comprising:
a mains interface configured to be connected to a mains power supply to provide a source of electrical energy for the power supply system;
a power bus electrically connected to the mains interface;
a plurality of direct current (DC) device interfaces, wherein a DC device interface of the plurality of DC device interfaces comprises a bidirectional DC converter, an end of the bidirectional DC converter is connected to the power bus, and another end of the bidirectional DC converter is connected to an energy storage device;
at least one alternating current (AC) device interface, wherein an AC device interface of the at least one AC device interface is electrically connected to the mains interface and the DC device interface and used for connecting an AC power device; and
a bidirectional inverter device electrically connected between the mains interface and the DC device interface and configured to convert inputted AC power into DC power or convert inputted DC power into AC power;
wherein the DC device interface comprises a first working state and a second working state, wherein in a case where the DC device interface is configured to be in the first working state, electrical energy flows from the power bus to the energy storage device via the bidirectional DC converter; and in a case where the DC device interface is configured to be in the second working state, the electrical energy flows from the energy storage device to the power bus via the bidirectional DC converter.

17. The power supply system of claim 16, further comprising a solar interface configured to be electrically connected between a solar panel and the power bus so that the electrical energy flows from the solar panel to the power bus.

18. The power supply system of claim 16, wherein the DC device interface comprises a second DC device interface, the second DC device interface comprises a second bidirectional DC converter, an end of the second bidirectional DC converter is connected to the power bus, another end of the second bidirectional DC converter is connected to a second energy storage device, and the electrical energy flowing from the energy storage device to the power bus via the bidirectional DC converter flows from the power bus to the second energy storage device via the second bidirectional DC converter.

19. The power supply system of claim 18, wherein power-line communication is implemented between the DC device interface and the second DC device interface through the power bus.

20. The power supply system of claim 16, wherein the electrical energy flowing from the energy storage device to the power bus via the bidirectional DC converter flows to the AC device interface via the bidirectional inverter device to supply power to the AC power device.

21. The power supply system of claim 20, wherein power-line communication is implemented between the AC device interface and the DC device interface through the power bus.

22. The power supply system of claim 16, wherein the electrical energy flowing from the energy storage device to the power bus via the bidirectional DC converter flows to the mains interface via the bidirectional inverter device so that the electrical energy is fed back to an electrical grid.

23. The power supply system of claim 16, wherein a voltage of the power bus is greater than or equal to 40 V and less than or equal to 60 V.

24. The power supply system of claim 16, further comprising a control device, wherein the control device is configured to control, according to a preset instruction, a flow direction of the electrical energy flowing through the power bus.

25. The power supply system of claim 24, further comprising a communication device configured to be communicatively connected to an external device.

26. The power supply system of claim 25, wherein the external device transmits a command to the control device through the communication device to control the DC device interface to switch between the first working state and the second working state.

27. The power supply system of claim 25, wherein each of the plurality of DC device interfaces has a unique number, and the external device identifies a corresponding one of the plurality of DC device interfaces through the unique number and controls a state of the corresponding one of the plurality of DC device interfaces.

28. The power supply system of claim 27, wherein the external device is configured to be operable by a user to configure the unique number of the corresponding one of the plurality of DC device interfaces.

29. The power supply system of claim 25, wherein through the communication device, the external device acquires information about the energy storage device electrically connected to the DC device interface, wherein the information comprises at least a model, a current battery level, and temperature of the energy storage device.

30. The power supply system of claim 25, wherein the control device is configured to send fault information of the power supply system to the external device through the communication device to remind a user.

31. A power supply system, comprising:
a mains interface configured to be connected to a mains power supply to provide a source of electrical energy for the power supply system;
a power bus electrically connected to the mains interface;
a plurality of direct current (DC) device interfaces connected to the power bus, wherein at least one of the plurality of DC device interfaces is used for connecting an energy storage device;
at least one alternating current (AC) device interface, wherein an AC device interface of the at least one AC device interface is electrically connected to the mains interface and a DC device interface of the plurality of DC device interfaces and used for connecting an AC power device; and
a control device configured to control a flow direction of energy on the power bus;
wherein the DC device interface comprises a first working state and a second working state, wherein in a case where the DC device interface is configured to be in the first working state, electrical energy flows from the power bus to the energy storage device; and in a case where the DC device interface is configured to be in the second working state, the electrical energy flows from the energy storage device to the power bus; and
energy transfer efficiency of the power supply system is greater than or equal to 90%.

32. The power supply system of claim 31, wherein the energy transfer efficiency of the power supply system is greater than or equal to 85%.

33. The power supply system of claim 31, wherein the plurality of DC device interfaces comprise a first DC device interface and a second DC device interface, a first bidirectional DC converter is electrically connected between the first DC device interface and the power bus, and a second bidirectional DC converter is electrically connected between the second DC device interface and the power bus.

34. The power supply system of claim 33, wherein the power supply system has a plurality of working modes, and the control device is configured to control the plurality of working modes of the power supply system according to user input or a preset instruction.

35. The power supply system of claim 34, wherein in a case where the power supply system is configured to be in a first working mode, the mains interface is connected to AC power, and the DC device interface is in the first working state.

36. The power supply system of claim 34, wherein in a case where the power supply system is configured to be in a second working mode, the first DC device interface and the second DC device interface are in the second working state, and an output voltage of the first bidirectional DC converter is basically equal to an output voltage of the second bidirectional DC converter.

37. The power supply system of claim 36, wherein in the case where the power supply system is configured to be in the second working mode, the energy transfer efficiency of the power supply system is greater than or equal to 90%.

38. The power supply system of claim 34, wherein in a case where the power supply system is configured to be in a third working mode, the first DC device interface electrically connected to a first energy storage device is configured to be in the first working state, the second DC device interface electrically connected to a second energy storage device is configured to be in the second working state, and an output voltage of the first energy storage device is greater than an output voltage of the second energy storage device.

39. The power supply system of claim 38, wherein the electrical energy flowing to the power bus via the first DC device interface flows from the AC device interface to the AC power device to supply power to the AC power device.

40. The power supply system of claim 39, wherein in the case where the power supply system is configured to be in the third working mode, the energy transfer efficiency of the power supply system is greater than or equal to 95%.

41. The power supply system of claim 34, wherein a bidirectional inverter device is further electrically connected to the power bus, and the bidirectional inverter device is disposed between the mains interface and the DC device interface and is configured to convert inputted AC power into DC power or convert inputted DC power into AC power.

42. The power supply system of claim 31, wherein the control device is configured to feed the electrical energy flowing from the energy storage device to the power bus to an electrical grid through the mains interface.

43. The power supply system of claim 31, further comprising a communication device communicatively connected to an external device, wherein the communication device transmits a command to the control device to control the DC device interface to switch between the first working state and the second working state.

44. The power supply system of claim 43, wherein each of the plurality of DC device interfaces has a unique number, and the external device identifies a corresponding one of the plurality of DC device interfaces through the unique number and controls a state of the corresponding one of the plurality of DC device interfaces.

45. The power supply system of claim 43, wherein the control device is configured to send fault information of the power supply system to the external device through the communication device to remind a user.

46. A power supply system controlled by an external device, comprising:
a mains interface configured to be connected to a mains power supply to provide a source of electrical energy for the power supply system;
a power bus electrically connected to the mains interface;
a plurality of direct current (DC) device interfaces connected to the power bus, wherein at least one of the plurality of DC device interfaces is used for connecting an energy storage device;
at least one alternating current (AC) device interface, wherein an AC device interface of the at least one AC device interface is electrically connected to the mains interface and a DC device interface of the plurality of DC device interfaces and used for connecting an AC power device;
a communication device configured to be communicatively connected to the external device; and
a control device electrically connected to the communication device, wherein the control device controls a flow direction of energy on the power bus;
wherein the DC device interface has a plurality of working states, wherein in a first working state, electrical energy flows from the power bus to the energy storage device;
and in a second working state, the electrical energy flows from the energy storage device to the power bus; and
the external device transmits a command to the control device through the communication device to control the DC device interface to switch between the first working state and the second working state.

47. The power supply system of claim 46, wherein each of the plurality of DC device interfaces has a unique number, and the external device identifies a corresponding one of the plurality of DC device interfaces through the unique number and controls a state of the corresponding one of the plurality of DC device interfaces.

48. The power supply system of claim 46, wherein the external device is configured to be operable by a user to configure the unique number of the corresponding one of the plurality of DC device interfaces.

49. The power supply system of claim 46, wherein through the communication device, the external device acquires information about the energy storage device electrically connected to the DC device interface, wherein the information comprises at least a model, a current battery level, and temperature of the energy storage device.

50. The power supply system of claim 46, wherein the external device is in signal connection with the communication device to acquire a current state of the AC device interface.

51. The power supply system of claim 46, wherein a communication manner between the external device and the communication device comprises wired communication or wireless communication.

52. The power supply system of claim 51, wherein the wireless communication comprises Bluetooth, Wireless Fidelity (Wi-Fi), the Internet, a cellular network, or long-term evolution (LTE) of universal mobile communication technology.

53. The power supply system of claim 46, wherein the control device is configured to send fault information of the power supply system to the external device through the communication device to remind a user.
